(19) Europäisches Patentamt
European Patent Office
Office européen des brevets

(11) **EP 4 411 627 A1**

(12) **EUROPEAN PATENT APPLICATION**
published in accordance with Art. 153(4) EPC

(43) Date of publication:
**07.08.2024 Bulletin 2024/32**

(51) International Patent Classification (IPC):
***G06T 3/40*** (2024.01)

(21) Application number: **22872254.2**

(22) Date of filing: **27.09.2022**

(86) International application number:
**PCT/CN2022/121930**

(87) International publication number:
**WO 2023/046211 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2021 CN 202111133068**

(71) Applicant: **Tianyuan 3D (Tianjin) Technology Co., Ltd.**
**Tianjin 300131 (CN)**

(72) Inventors:
• **LI, Zhouqiang**
**Tianjin 300131 (CN)**
• **ZHAO, Xiaobo**
**Tianjin 300131 (CN)**
• **XU, Yukai**
**Tianjin 300131 (CN)**
• **NIU, Tao**
**Tianjin 300131 (CN)**
• **LI, Renju**
**Tianjin 300131 (CN)**

(74) Representative: **HGF**
**HGF BV**
**Benoordenhoutseweg 46**
**2596 BC The Hague (NL)**

(54) **PHOTOGRAMMETRY METHOD, APPARATUS AND DEVICE, AND STORAGE MEDIUM**

(57) Embodiments of the present disclosure relate to a photogrammetry method, apparatus and device, and a storage medium. Multiple groups of synchronous images of an object to be measured provided with multiple mark points on a surface continuously photographed by a multi-view camera are obtained, coordinates of image points corresponding to the mark points in each group of synchronous images are extracted, and first three-dimensional coordinates of the mark points corresponding to the image points are reconstructed according to calibration data of the multi-view camera and the coordinates of the image points to obtain multiple groups of three-dimensional mark points; and a mark point global framework corresponding to the mark points on the surface of the object to be measured is constructed based on the multiple groups of three-dimensional mark points. Photogrammetry can be realized without arranging encoded points or only arranging a small number of encoded points, manual workload is reduced, and measurement efficiency and accuracy are improved.

Obtain a plurality of groups of synchronous images of an object to be measured continuously photographed by a multi-view camera, where each group of synchronous images includes a plurality of images photographed by a plurality of cameras in the multi-view camera at a same moment, and a plurality of mark points are arranged on a surface of the object to be measured — 101

Extract coordinates of image points corresponding to the mark points in the synchronous images for each group of synchronous images, and reconstruct first three-dimensional coordinates of the mark points corresponding to the image points according to calibration data of the multi-view camera and the extracted coordinates of the image points to obtain a plurality of groups of three-dimensional mark points — 102

Construct a mark point global framework corresponding to the mark points on the surface of the object to be measured based on the plurality of groups of three-dimensional mark points — 103

FIG. 1

EP 4 411 627 A1

**Description**

**Cross-Reference to Related Applications**

The present disclosure claims priority to Chinese Patent Application No. 202111133068.3 submitted to the Chinese Patent Office on September 27, 2021, entitled "Method, Apparatus and device for photogrammetry, and Storage Medium", which is incorporated by reference in its entirety.

**Technical Field**

The present disclosure relates to the technical field of photogrammetry, and in particular to a method, apparatus and device for photogrammetry, and a storage medium.

**Background**

In the related art, in the photogrammetry implemented based on monocular cameras, it is generally necessary to manually arrange a large number of encoded points on a surface of a measured object. Moreover, in the process of arrangement, some experiences are required, such as density distribution and spatial position relationship of the arrangement. After the photogrammetry is completed, it is also necessary to recover these encoded points, and the processes of arrangement and recovery are very time-consuming. Furthermore, if positions of the encoded points are moved in a photographing process, it may also cause measurement failure or a decrease in measurement accuracy. Therefore, there is an urgent need for a new photogrammetry method to solve the above problems.

**Summary**

In order to solve the above technical problems or at least partially solve the above technical problems, embodiments of the present disclosure provide a method, apparatus and device for photogrammetry, and a storage medium.

A first aspect according to the embodiments of the present disclosure provides a method for photogrammetry. The method includes the following steps:

> obtaining multiple groups of synchronous images of an object to be measured continuously photographed by a multi-view camera, each group of synchronous images including multiple images photographed by multiple cameras in the multi-view camera at a same moment, and multiple mark points being arranged on a surface of the object to be measured;
> extracting coordinates of image points corresponding to the mark points in the synchronous images for each group of synchronous images, and reconstructing first three-dimensional coordinates of the mark points corresponding to the image points according to calibration data of the multi-view camera and the coordinates of the image points to obtain multiple groups of three-dimensional mark points; and
> constructing a mark point global framework corresponding to the mark points on the surface of the object to be measured based on the multiple groups of three-dimensional mark points.

A second aspect according to the embodiments of the present disclosure provides an apparatus for photogrammetry, including:

> an obtaining component, configured to obtain multiple groups of synchronous images of an object to be measured continuously photographed by a multi-view camera, each group of synchronous images including multiple images photographed by multiple cameras in the multi-view camera at a same moment, and multiple mark points being arranged on a surface of the object to be measured;
> a processing component, configured to extract coordinates of image points corresponding to the mark points in the synchronous images for each group of synchronous images, and reconstruct first three-dimensional coordinates of the mark points corresponding to the image points according to calibration data of the multi-view camera and the coordinates of the image points to obtain multiple groups of three-dimensional mark points; and
> a constructing component, configured to construct a mark point global framework corresponding to the mark points on the surface of the object to be measured based on the multiple groups of three-dimensional mark points.

A third aspect according to the embodiments of the present disclosure provides a photogrammetry device. The photogrammetry device includes a memory and a processor. The memory stores a computer program, and the computer program, when executed by the processor, may implement the method described in the first aspect.

A fourth aspect according to the embodiments of the present disclosure provides a computer-readable storage medium. The storage medium stores a computer program, and the computer program, when executed by a processor, may implement the method described in the first aspect.

Compared with the related art, the technical solutions provided in the embodiments of the present disclosure have the following advantages:

In the embodiments of the present disclosure, multiple groups of synchronous images obtained by continuously photographing an object to be measured provided with multiple mark points on a surface by a multi-view camera are obtained. Each group of synchronous images includes multiple images photographed by multiple cameras in the multi-view camera at a same moment; coordinates of image points corresponding to the mark points in each group of synchronous images are extracted, and first three-dimensional coordinates of the mark points corresponding to the image points are reconstructed according to calibration data of the multi-view camera and the coordinates of the image points to obtain multiple groups of three-dimensional mark points; and a mark point global framework corresponding to the mark points on the surface of the object to be measured is constructed based on the multiple groups of three-dimensional mark points. According to the technical solutions provided in the embodiments of the present disclosure, matching of the same mark points can be achieved without encoded points or with a small number of encoded points by a multi-view measurement technology, thus achieving the photogrammetry without encoded points or with a small number of encoded points, reducing workload of the measuring personnel in arranging encoded points, and improving measurement efficiency. Furthermore, because the photogrammetry of an object to be measured can be achieved without encoded points, inaccurate measurement due to movement of encoded points is avoided, and measurement accuracy is improved.

**Brief Description of Figures**

The accompanying drawings herein are incorporated in and constitute a part of the specification, illustrating embodiments consistent with the present disclosure, and explaining the principles of the present disclosure together with the specification.

In order to provide a clearer explanation of the embodiments of the present disclosure or technical solutions in the related art, the accompanying drawings required in the embodiments or description of the related art will be briefly introduced below. It is evident that for those of ordinary skill in the art, other drawings may also be obtained based on these accompanying drawings without any creative effort.

FIG. 1 is a flowchart of a method for photogrammetry provided in an embodiment of the present disclosure;
FIG. 2 is a schematic diagram of a method for reconstructing three-dimensional coordinates based on a polar line matching method provided in an embodiment of the present disclosure;
FIG. 3 is a flowchart of another method for photogrammetry provided in an embodiment of the present disclosure;
FIG. 4 is a flowchart of still another method for photogrammetry provided in an embodiment of the present disclosure;
FIG. 5 is a flowchart of yet another method for photogrammetry provided in an embodiment of the present disclosure;
FIG. 6 is a flowchart of still yet another method for photogrammetry provided in an embodiment of the present disclosure; and
FIG. 7 is a schematic structural diagram of an apparatus for photogrammetry provided in an embodiment of the present disclosure.

**Detailed Description**

In order to make the understanding of the above objectives, features and advantages of the present disclosure clearer, technical solutions of the present disclosure will be further described below. It should be noted that embodiments of the present disclosure and features in the embodiments can be combined with each other in the case of no conflict.

Many specific details are set forth in the following description in order to fully understand the present disclosure, but the present disclosure may also be implemented in other ways different from those described herein. Definitely, embodiments of the specification are merely a part of the embodiments of the present discourse and not all the embodiments.

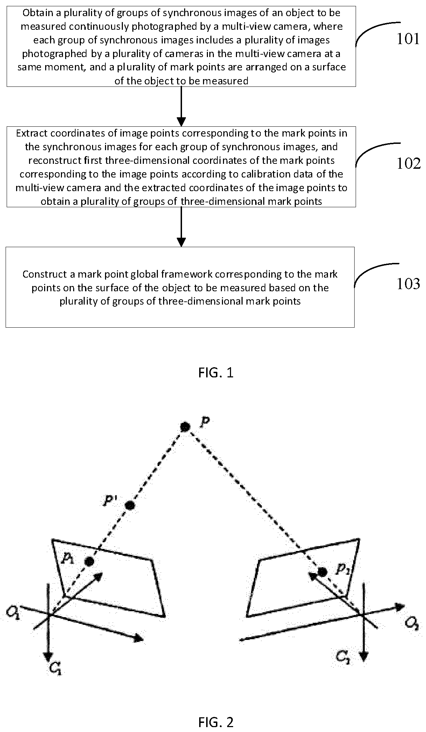

FIG. 1 is a flowchart of a photogrammetry method provided in an embodiment of the present disclosure. The method may be executed by a photogrammetry device. The photogrammetry device may be understood as any device with image processing and computing capabilities. As shown in FIG. 1, the method provided in this embodiment includes the following steps 101 to 103:

Step 101: Multiple groups of synchronous images of an object to be measured continuously photographed by a multi-view camera are obtained. Each group of synchronous images includes multiple images photographed by multiple cameras in the multi-view camera at a same moment, and multiple mark points are arranged on a surface of the object to be measured.

The multi-view camera referred to in the embodiments of the present disclosure can be understood as a camera combination including two or more cameras. Before photographing, the multi-view camera can be calibrated first based on a calibration method provided by relevant technologies to obtain internal parameters of each camera in the multi-view camera and relative external parameters between the cameras. For example, in a feasible calibration mode, the multi-view camera can be calibrated by the following method:

In a case that the three-dimensional coordinates and actual numbers of mark points on a calibration plate are given, by collecting multiple groups of images at different positions and angles and using a bundle adjustment algorithm, iterative optimization is performed to minimize an error between the coordinates of image points of the mark points on the images and coordinates of projection points of the three-dimensional coordinates of the mark points on the images, so as to obtain internal parameters of each camera in the multi-view camera as well as exterior parameters (namely, external parameters) of each camera relative to the calibration plate at each photographing position, thus determining relative external parameters between the cameras according to the external parameters of each camera relative to the calibration plate at each photographing position to complete camera calibration.

The mark points referred to in the embodiments of the present disclosure refer to patterns which are made of retroreflective materials and have marking functions (such as dots having specific sizes, but not limited to dots). In the embodiments of the present disclosure, different mark points may have different features, such as diameters and colours, but are not limited to diameters and colours.

Each group of synchronous images referred to in the embodiments of the present disclosure includes the multiple images photographed by the multiple cameras in the multi-view camera at the same moment, which can be understood as n images photographed by n cameras at the same moment under a same trigger signal. Each camera corresponds to an image, and n is a positive integer greater than or equal to 2. Taking a binocular camera as an example, the binocular camera obtains a first group of synchronous images at a first time, and the first group of synchronous images includes: a first image 11 obtained by a first camera at the first time and a second image 12 obtained by a second camera at the first time; and the binocular camera obtains a second group of synchronous images at a second time, and the second group of synchronous images includes: a first image 21 obtained by the first camera at the second time and a second image 22 obtained by the second camera at the second time. Certainly, the binocular camera is only taken as an example for exemplary description, but not uniquely limited in the embodiments of the present disclosure.

In an implementation of the embodiments of the present disclosure, the multiple mark points can be arranged on a surface of the object to be measured in advance, and a multi-view industrial camera, such as a charge coupled device (CCD) camera, can be used for photographing. The multi-view industrial camera is a key component in a machine vision system, and the most essential function of the multi-view industrial camera is to transform optical signals into ordered electrical signals. The object to be measured can be continuously photographed by moving the multi-view industrial camera to obtain the multiple groups of synchronous images of the object to be measured.

Step 102: Coordinates of image points corresponding to the mark points in the synchronous images are extracted for each group of synchronous images, and first three-dimensional coordinates of the mark points corresponding to the image points are reconstructed according to calibration data of the multi-view camera and the extracted coordinates of the image points to obtain multiple groups of three-dimensional mark points.

The "first three-dimensional coordinates" referred to in the embodiments of the present disclosure are only used for distinguishing three-dimensional coordinates obtained based on a three-dimensional reconstruction method and three-dimensional coordinates obtained based on other methods, and do not have any other meaning.

The first three-dimensional coordinates of the mark points can be understood as coordinates of the mark points in a world coordinate system. The world coordinate system can be understood as a coordinate system established in the three-dimensional space to describe a position relationship between a camera and an object to be measured in the three-dimensional space. This coordinate system can be marked with $O_w X_w Y_w Z_w$. $O_w$ represents an origin of the coordinate system, $X_w$ represents an x-axis component of the coordinate system, $Y_w$ represents a y-axis component of the coordinate system, and $Z_w$ represents a z-axis component of the coordinate system. The origin of the world coordinate system may be set according to actual needs. The coordinates of mark points in the three-dimensional space may be marked with $(X_w, Y_w, Z_w)$.

A scenario in the space is projected by a pinhole model and imaged on a CCD, and then is collected and stored as an image. For the convenience of describing the image, it is necessary to define an image coordinate system. The image coordinate system is a two-dimensional coordinate system, an origin of the coordinate system is set at an upper left corner of the image, and an x axis and a y axis are coplanar with the synchronous image. The image point coordinates of mark points in the image refer to two-dimensional coordinates of image points corresponding to the mark points in the image coordinate system. In the image coordinate system, the coordinates of image points may be measured in pixels, and each pixel stores a gray value of the image.

In photogrammetry, a camera coordinate system and an image plane coordinate system are also needed. The camera coordinate system is mainly configured to complete the transformation from the world coordinate system to the image plane coordinate system, that is, complete the projection from three-dimensional coordinates to two-dimensional images. The image plane coordinate system can record two-dimensional information obtained from the projection of mark points to complete the transformation from the two-dimensional information to a synchronous image coordinate system.

The camera coordinate system is $O_cX_cY_cZ_c$, an optical centre of a camera is taken as an origin, an optical axis of the camera is selected as a $Z_c$ axis, and a plane formed by an $X_c$ axis and a $Y_c$ axis of the camera coordinate system is parallel to a surface of an image plane (namely synchronous image).

The plane where the image plane coordinate system is located is coplanar with the image plane, and the image plane coordinate system is defined as oxy. The origin o of the image plane coordinate system is selected at an intersection of the optical axis and the image plane. An effective focal length f of the camera defines distance from the optical centre to the image plane, and the x-axis and y-axis directions of the image plane coordinate system are respectively consistent with pixel directions of a camera imaging device.

In this embodiment, first three-dimensional coordinates of the mark points included in the synchronous images in the world coordinate system are reconstructed based on a polar line matching method by extracting the coordinates of the image points in the synchronous images corresponding to the mark points in the synchronous images and according to the pre-obtained calibration data of the multi-view camera (including internal parameters of each camera and relative external parameter between cameras) and the coordinates of the image points of the mark points in the synchronous images. For example, FIG. 2 is a schematic diagram of a method for reconstructing three-dimensional coordinates based on a polar line matching method. $C_1$ and $C_2$ in FIG. 2 can be understood as two cameras in the multi-view camera, the two cameras are subjected to data calibration in advance, respective internal parameters of the two cameras and relative external parameters between the two cameras are determined, $O_1$ can be understood as an optical centre of the camera $C_1$, $O_2$ can be understood as an optical centre of the camera $C_2$, and a point P can be understood as any mark point on a surface of an object to be measured in the space. If both the cameras $C_1$ and $C_2$ are used for simultaneously photographing the point P on the surface of the object to be measured, it can be seen that an image point of the point P in a synchronous image of the camera $C_1$ is located at $P_1$, and two-dimensional coordinates of $P_1$ in the synchronous image are extracted. It can be understood that any point P' on an $O_1P$ connecting line has an image point $P_1$ on the synchronous image, and three-dimensional coordinates of the point P in the world coordinate system cannot be obtained only through the point $P_1$. It can also be seen that an image point of the point P in a synchronous image of the camera $C_2$ is located at $P_2$, and two-dimensional coordinates of $P_2$ in the synchronous image are extracted. It can also be understood that any point on an $O_2P$ connecting line has an image point $P_2$ on the synchronous image, an intersection of the two straight lines $O_1P$ and $O_2P$ is a spatial position of the mark point P on the surface of the object to be measured, and three-dimensional coordinates of the point P are uniquely determined. In this way, three-dimensional coordinates (namely first three-dimensional coordinates referred to in the embodiments of the present disclosure) of the mark point P on the surface of the object to be measured in the world coordinate system are reconstructed. Certainly, FIG. 2 is only an exemplary description of a method for reconstructing three-dimensional coordinates based on a polar line matching method, rather than a unique description.

It should be noted that in an implementation of the embodiments of the present disclosure, the coordinates of the image points of the mark points in the synchronous images may be extracted by an edge extraction method. For example, edge extraction processing may be performed on the synchronous images first to obtain image points of the mark points in the synchronous images, and then, the coordinates of the image points in a coordinate system of the synchronous images are determined based on the positions of the image points of the mark points in the synchronous images. Certainly, this method is only one method for extracting the coordinates of image points of mark points, but is not a unique method.

Multiple groups of three-dimensional mark points referred to in the embodiments of the present disclosure refer to three-dimensional mark points obtained by processing each group of synchronous images in multiple groups of synchronous images.

In the embodiments of the present disclosure, a corresponding three-dimensional mark point can be computed based on each image point on each group of synchronous images, and three-dimensional mark points computed based on image points on different synchronous images may be the same.

Step 103: A mark point global framework corresponding to the mark points on the surface of the object to be measured is constructed based on the multiple groups of three-dimensional mark points.

In the embodiments of the present disclosure, the multiple groups of three-dimensional mark points can be stitched in a certain order based on the multiple groups of obtained three-dimensional mark points, so as to construct the mark point global framework corresponding to the mark points on the surface of the object to be measured.

In the embodiments of the present disclosure, the multiple groups of synchronous images obtained by continuously photographing the object to be measured provided with the multiple mark points on the surface by the multi-view camera are obtained. Each group of synchronous images includes the multiple images photographed by the multiple cameras in the multi-view camera at the same moment; the coordinates of image points corresponding to the mark points in each group of synchronous images are extracted, and first three-dimensional coordinates of the mark points corresponding to the image points are reconstructed according to the calibration data of the multi-view camera and the coordinates of the image points to obtain the multiple groups of three-dimensional mark points; and the mark point global framework corresponding to the mark points on the surface of the object to be measured is constructed based on the multiple groups of three-dimensional mark points. Matching of the same mark points can be achieved without encoded points or with a small number of encoded points, thus achieving the photogrammetry without encoded points or with a small number of encoded points, reducing workload of the measuring personnel in arranging encoded points, and improving measurement efficiency. Furthermore, because the photogrammetry of an object to be measured can be achieved without encoded points, inaccurate measurement due to movement of encoded points is avoided, and measurement accuracy is improved.

In some embodiments of the present disclosure, the mark point global framework corresponding to the mark points on the surface of the object to be measured is constructed based on multiple groups of three-dimensional mark points, and tracking and stitching processing and inter-group deduplication processing can be performed on the multiple groups of three-dimensional mark points to obtain the mark point global framework corresponding to the mark points on the surface of the object to be measured.

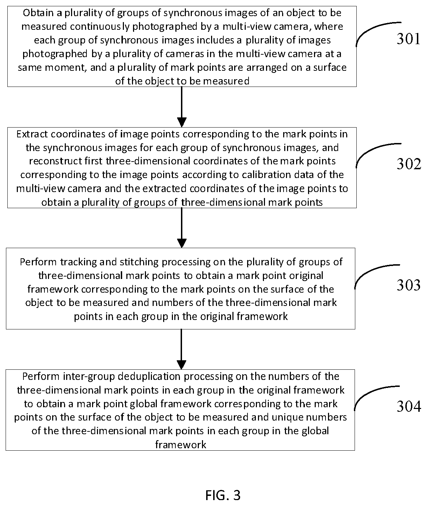

In some embodiments, tracking and stitching processing and inter-group deduplication processing are performed on the multiple groups of three-dimensional mark points to obtain the mark point global framework corresponding to the mark points on the surface of the object to be measured. A flowchart of a photogrammetry method provided in FIG. 3 can be executed. As shown in FIG. 3, the method provided in this embodiment includes the following steps 301 to 305:

Step 301: Multiple groups of synchronous images of an object to be measured continuously photographed by a multi-view camera are obtained. Each group of synchronous images includes multiple images photographed by multiple cameras in the multi-view camera at the same moment, and multiple mark points are arranged on a surface of the object to be measured.

Step 302: Coordinates of image points corresponding to the mark points in the synchronous images are extracted for each group of synchronous images, and first three-dimensional coordinates of the mark points corresponding to the image points are reconstructed according to calibration data of the multi-view camera and the coordinates of the image points to obtain multiple groups of three-dimensional mark points.

Step 303: Tracking and stitching processing is performed on the multiple groups of three-dimensional mark points to obtain a mark point original framework corresponding to the mark points on the surface of the object to be measured and numbers of the three-dimensional mark points in each group in the original framework.

In the embodiments of the present disclosure, spatial triangles can be established respectively based on the three-dimensional mark points in each group of synchronous images, then congruent triangles in inter-group triangles are matched, the three-dimensional mark points that form two congruent triangles are determined as the same three-dimensional mark points, and thus, two synchronous images are stitched based on the corresponding relationship between inter-group congruent triangles. Specifically, when the corresponding relationship cannot be found in inter-group matching, the corresponding relationship will be searched for this group in the global framework. In this way, tracking and stitching of the multiple groups of three-dimensional mark points can be achieved to obtain the mark point original framework.

During tracking of three-dimensional mark points, the features of each group of three-dimensional mark points, such as triangles formed between three-dimensional mark points, can be extracted first based on the characteristic that different three-dimensional mark points have different features, and then, the three-dimensional mark points with the feature similarity higher than or equal to a preset threshold are determined as the same three-dimensional mark points and the three-dimensional mark points with the feature similarity less than the preset threshold are determined as different three-dimensional mark points based on the features of each group of three-dimensional mark points, so the same three-dimensional mark points in each group are numbered with the same numbers, and different three-dimensional mark points in each group are numbered with different numbers, so as to obtain numbers of the three-dimensional mark points in each group in the mark point original framework. For example, a first group of synchronous images are images photographed for the first time during continuous photographing of cameras, and a second group of synchronous images are images photographed for the second time during continuous photographing of cameras; the first group of synchronous images have 5 three-dimensional mark points with different features, numbered as 1, 2, 3, 4 and 5 respectively; and the second group of synchronous images have 6 three-dimensional mark points with different features. 5 three-dimensional mark points are the same as the 5 three-dimensional mark points in the first group of synchronous images respectively, so the 5 three-dimensional mark points in the second group of synchronous images are numbered as 1, 2, 3, 4 and 5 correspondingly. That is to say, the same three-dimensional mark points are numbered with the same numbers, the remaining three-dimensional mark point is numbered as 6, and different three-dimensional mark points are numbered with different numbers.

Step 304: Inter-group deduplication processing is performed on the numbers of the three-dimensional mark points in each group in the original framework to obtain a mark point global framework corresponding to the mark points on the surface of the object to be measured and unique numbers of the three-dimensional mark points in each group in the global framework.

In the embodiments of the present disclosure, each group of synchronous images are located in different coordinate systems before stitching. During stitching processing of each group of synchronous images, it is necessary to transform each group of synchronous images from respective different coordinate systems to the same coordinate system for stitching; and during transformation of different coordinate systems, there are system errors, and the stitching process may cause error accumulation. As a result, in the embodiments of the present disclosure, inter-group deduplication processing is performed according to the number of each three-dimensional mark point in the original framework, the three-dimensional coordinates of each three-dimensional mark point and the position of the image point of each three-dimensional mark point in each synchronous image, so as to obtain a mark point global framework corresponding to the mark points on the surface of the object to be measured and unique numbers of the three-dimensional mark points in each group in the global framework to ensure the uniqueness and consistency of the number of each three-dimensional mark point in the global framework, thus eliminating or reducing the cumulative error in transformation of coordinate systems for each group of synchronous images during stitching, ensuring accuracy of multiple groups of synchronous images during stitching, and ensuring the uniqueness of the numbers of the three-dimensional mark points in each group in the global framework. The inter-group deduplication processing may also be referred to as inter-frame deduplication processing. The method for performing inter-group deduplication processing in the embodiments of the present disclosure is similar to that in related technologies, and will not be described here.

Compared with the related art, the technical solutions provided in the embodiments of the present disclosure have the following advantages:

In the embodiments of the present disclosure, multiple groups of synchronous images obtained by continuously photographing an object to be measured provided with multiple mark points on a surface by a multi-view camera are obtained. Each group of synchronous images includes multiple images photographed by multiple cameras in the multi-view camera at a same moment; coordinates of image points corresponding to the mark points in each group of synchronous images are extracted, and first three-dimensional coordinates of the mark points corresponding to the image points are reconstructed according to calibration data of the multi-view camera and the coordinates of the image points to obtain multiple groups of three-dimensional mark points; tracking and stitching processing is performed on the multiple groups of three-dimensional mark points to obtain a mark point original framework corresponding to the mark points on the surface of the object to be measured and numbers of the three-dimensional mark points in each group in the original framework; and inter-group deduplication processing is performed on the numbers of the three-dimensional mark points in each group in the original framework to obtain a global framework and unique numbers of the three-dimensional mark points in each group in the global framework. According to the technical solutions provided in the embodiments of the present disclosure, matching of the same mark points can be achieved without encoded points or with a small number of encoded points by combining a multi-view measurement technology with a tracking and stitching technology and an inter-group deduplication technology, thus achieving the photogrammetry without encoded points or with a small number of encoded points, reducing workload of the measuring personnel in arranging encoded points, and improving measurement efficiency. Furthermore, because the photogrammetry of an object to be measured can be achieved without encoded points, inaccurate measurement due to movement of encoded points is avoided, and measurement accuracy is improved.

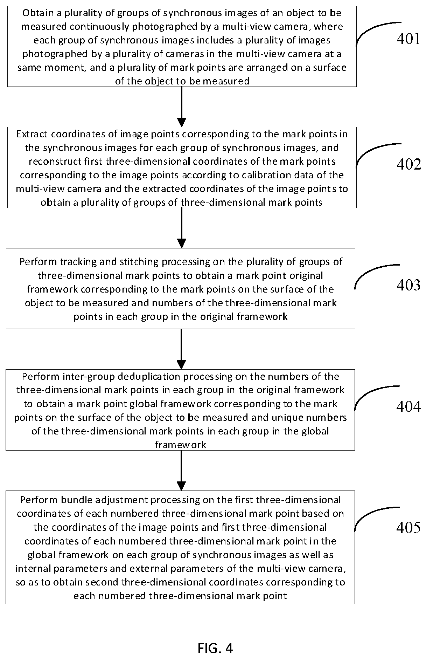

FIG. 4 is a flowchart of still another photogrammetry method provided in an embodiment of the present disclosure. As shown in FIG. 4, the method includes steps 401 to 405:

Step 401: Multiple groups of synchronous images of an object to be measured continuously photographed by a multi-view camera are obtained. Each group of synchronous images includes multiple images photographed by multiple cameras in the multi-view camera at a same moment, and multiple mark points are arranged on a surface of the object to be measured.

Step 402: Coordinates of image points corresponding to the mark points in the synchronous images are extracted for each group of synchronous images, and first three-dimensional coordinates of the mark points corresponding to the image points are reconstructed according to calibration data of the multi-view camera and the extracted coordinates of the image points to obtain multiple groups of three-dimensional mark points.

Step 403: Tracking and stitching processing is performed on the multiple groups of three-dimensional mark points to obtain a mark point original framework corresponding to the mark points on the surface of the object to be measured and numbers of the three-dimensional mark points in each group in the original framework.

Step 404: Inter-group deduplication processing is performed on the numbers of the three-dimensional mark points in each group in the original framework to obtain a global framework and unique numbers of the three-dimensional mark points in each group in the global framework.

Step 405: Bundle adjustment processing is performed on the first three-dimensional coordinates of each numbered three-dimensional mark point based on the coordinates of the image points and the first three-dimensional coordinates of each numbered three-dimensional mark point in the global framework on each group of synchronous images as well as internal parameters and external parameters of the multi-view camera, so as to obtain second three-dimensional coordinates corresponding to each numbered three-dimensional mark point.

Specifically, after the above steps of reconstructing the first three-dimensional coordinates of the mark points and performing tracking and stitching processing and inter-group deduplication processing are completed, all three-dimensional mark points in the obtained framework have determined unique numbers. Simultaneously, there is a one-to-one correspondence relationship between the mark points included in each synchronous image and the three-dimensional mark points in the global framework. Furthermore, the internal parameters and external parameters of the multi-view camera, the coordinates of the image points of each numbered three-dimensional mark point on each group of synchronous images, and the first three-dimensional coordinates of each numbered three-dimensional mark point are obtained in advance. Thus, all conditions required for bundle adjustment are prepared.

In some embodiments, the process of performing bundle adjustment processing on the first three-dimensional coordinates of each numbered three-dimensional mark point based on the coordinates of the image points and the first three-dimensional coordinates of each numbered three-dimensional mark point in the global framework on each group of synchronous images as well as internal parameters and external parameters of the multi-view camera, so as to obtain second three-dimensional coordinates corresponding to each numbered three-dimensional mark point may include steps 40501 to 40502:

Step 40501: Internal orientation elements and external orientation elements corresponding to each group of synchronous images are respectively inputted into collinear equations to obtain collinear equations to be solved corresponding to each group of synchronous images.

In practice, internal parameters of a camera include internal orientation elements, distortion coefficients, pixel sizes in horizontal and vertical directions, and a ratio of the pixel sizes in the horizontal and vertical directions. The internal orientation elements include a translation distance xo from an origin o of an image plane coordinate system (an intersection of an optical axis of the camera and an image plane) to a centre of a synchronous image in a horizontal direction, a translation distance yo from the origin o of the image plane coordinate system to the centre of the synchronous image in a vertical direction, and a distance from an optical centre of the camera to the image plane, namely an effective focal length f of the camera. That is to say, the internal orientation elements express the spatial position of the optical centre of the camera relative to the centre of the synchronous image. The internal parameters of the camera can be obtained through camera calibration. It can be considered that the internal orientation elements are determined in the camera calibration mentioned above.

In the embodiments of the present disclosure, the parameters of the spatial position and posture of a photographic beam at a moment of photography can be determined according to the internal parameters and external parameters of the multi-view camera. The parameters of the spatial position and posture of the photographic beam at the moment of photography are referred to as external orientation elements for representing the spatial position of the photographic beam at the moment of photography. The external orientation elements include six parameters. Three elements are line elements for describing spatial coordinate values of a photographic centre, and the other three are angle elements for describing the spatial posture of the image.

Specifically, a collinear equation is a mathematical relationship expressing that an object point, an image point and a projection centre (usually a lens centre for an image) are located on a straight line.

In some embodiments of the present disclosure, internal orientation elements and external orientation elements corresponding to each group of synchronous images can be inputted into collinear equations to obtain collinear equations to be solved corresponding to each group of synchronous images. The collinear equations are represented by the following formulae:

$$x - x_0 = -f \frac{a_1(X_A - X_S) + b_1(Y_A - Y_s) + c_1(Z_A - Z_S)}{a_3(X_A - X_S) + b_3(Y_A - Y_s) + c_3(Z_A - Z_S)}$$

$$y - y_0 = -f \frac{a_2(X_A - X_S) + b_2(Y_A - Y_s) + c_2(Z_A - Z_S)}{a_3(X_A - X_S) + b_3(Y_A - Y_s) + c_3(Z_A - Z_S)}$$

x and y represent image point coordinates of a mark point;

xo, yo and f represent internal orientation elements of an image;

$X_S$, $Y_S$ and $Z_S$ represent external orientation line elements of an image;

$X_A$, $Y_A$ and $Z_A$ represent three-dimensional coordinates of a mark point; and

$a_i$, $b_i$ and $c_i$ (i=1, 2, 3) represent 9 direction cosines composed of 3 external orientation angle elements of an image.

Step 40502: Iterative computations are performed on all collinear equations to be solved in sequence by taking the coordinates of the image points of each numbered three-dimensional mark point in the global framework on each group of synchronous images and the first three-dimensional coordinates of each numbered three-dimensional mark point as initial values based on a bundle adjustment algorithm, so as to obtain the second three-dimensional coordinates corresponding to each numbered three-dimensional mark point.

Specifically, first, the coordinates of the image points of each numbered three-dimensional mark point in the global framework on each group of synchronous images and the first three-dimensional coordinates of each numbered three-dimensional mark point are taken as initial values to be inputted into collinear equations to be solved corresponding to each group of synchronous images for iterative computations, the three-dimensional mark points and the internal parameters and external parameters of the multi-view camera are optimized jointly at the same time, and optimal coordinates of the three-dimensional mark points, namely the second three-dimensional coordinates of the three-dimensional mark points, are obtained through minimum residuals. The process of the bundle adjustment algorithm involved in the embodiments of the present disclosure is similar to that in related technologies, so details can refer to the bundle adjustment algorithm provided in the related technologies and will not be described here.

In this embodiment, by performing tracking and stitching processing on multiple groups of three-dimensional mark points, features of each group of three-dimensional mark points are extracted to number the three-dimensional mark points; inter-group deduplication processing is performed on the numbers of the three-dimensional mark points in each group in the framework to ensure the uniqueness and consistency of the numbers of the three-dimensional mark points in each group in the framework; bundle adjustment processing is performed on the first three-dimensional coordinates of each numbered three-dimensional mark point based on the coordinates of the image points and the first three-dimensional coordinates of each numbered three-dimensional mark point in the framework on each group of synchronous images as well as the internal parameters and external parameters of the multi-view camera, so as to obtain second three-dimensional coordinates corresponding to each numbered three-dimensional mark point, namely optimized three-dimensional coordinates, so that a three-dimensional image obtained by multi-view measurement is more accurate, adverse impacts on the measurement result of the multi-view camera caused by environmental factors such as temperature are avoided, and a reconstructing result can be viewed in real time; and the image point coordinates of the mark points are directly processed to determine three-dimensional coordinates of the mark points, so that the amount of computation is small, and measurement efficiency can be improved.

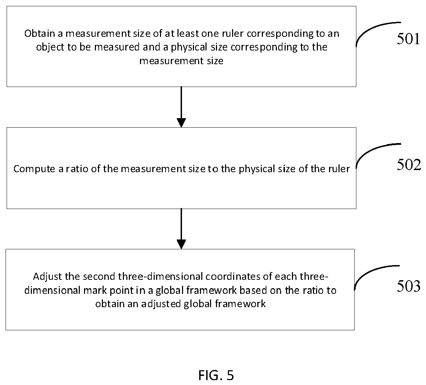

In some embodiments of the present disclosure, a ruler may be arranged on the surface of the object to be measured or periphery of the object to be measured. Multiple groups of synchronous images of the object to be measured continuously photographed by the multi-view camera include the object to be measured and the ruler, that is, the ruler and the object to be measured are photographed simultaneously by the multi-view camera. After the unique numbers of the three-dimensional mark points in each group in the global framework are obtained, the photogrammetry device may also execute a flowchart of a photogrammetry method provided in FIG. 5. As shown in FIG. 5, the method includes steps 501 to 503:

Step 501: A measurement size of at least one ruler corresponding to the object to be measured and a physical size corresponding to the measurement size are obtained.

The ruler in the embodiments of the present disclosure can be understood as a ruler with a known physical size, which can be used as a reference for photogrammetry. The physical size can be understood as an actual size, for example, the physical size may include an actual length of the ruler, and the like. Each ruler may be composed of at least two encoded mark points arranged on the surface of the object to be measured or periphery of the object to be measured, the encoded mark points can be understood as special mark points with known encoded information, and the physical size of the ruler may be obtained according to the distance between the encoded mark points. At least one ruler corresponds to the object to be measured. In some embodiments, the ruler may include a ruler carrier, and encoded mark points may be arranged on the ruler carrier.

In the embodiments of the present disclosure, a measurement size of at least one ruler corresponding to the object to be measured and a physical size corresponding to the measurement size can be obtained.

In some embodiments, the process of obtaining a measurement size of at least one ruler corresponding to the object to be measured and a physical size corresponding to the measurement size may include steps 50101 to 50103:
Step 50101: Second three-dimensional coordinates of encoded mark points corresponding to the encoded information are obtained based on the encoded information on any two encoded mark points in the ruler.

In the embodiments of the present disclosure, first three-dimensional coordinates of the mark points on the surface of the object to be measured and first three-dimensional coordinates of the encoded mark points on the ruler corresponding to the object to be measured can be reconstructed based on multiple groups of synchronous images, so as to obtain the multiple groups of three-dimensional mark points; tracking and stitching processing, inter-group deduplication processing and bundle adjustment processing are performed on the multiple groups of three-dimensional mark points to obtain second three-dimensional coordinates of each three-dimensional mark point; the second three-dimensional coordinates include second three-dimensional coordinates of the mark points on the surface of the object to be measured and second three-dimensional coordinates of the encoded mark points on the ruler corresponding to the object to be measured; and second three-dimensional coordinates of the encoded mark points corresponding to the encoded information are obtained based on the encoded information on any two encoded mark points in the ruler.

Step 50102: The distance between any two encoded mark points is computed based on the second three-dimensional coordinates of the encoded mark points corresponding to the encoded information, so as to obtain a measurement size corresponding to the ruler.

In the embodiments of the present disclosure, the distance between any two encoded mark points can be computed based on the second three-dimensional coordinates of the encoded mark points corresponding to the encoded information, and the distance is determined as the measurement size corresponding to the ruler.

Step 50103: A physical size corresponding to the measurement size is determined based on the encoded information on the encoded mark points corresponding to the measurement size.

In the embodiments of the present disclosure, identification information of the ruler and the physical size determined by any two encoded mark points in the ruler corresponding to the identification information of the ruler may be stored in advance, and the identification information of the ruler includes the encoded information of each encoded mark point in the ruler.

In the embodiments of the present disclosure, the identification information corresponding to the encoded information may be determined based on the encoded information on the encoded mark point corresponding to the measurement size, and the physical size corresponding to the measurement size is obtained in the physical size of the ruler corresponding to the identification information.

Step 502: A ratio of the measurement size to the physical size of the ruler is computed.

In the embodiments of the present disclosure, after the measurement size and the physical size of the ruler are obtained, a ratio of the measurement size to the physical size of each ruler can be computed.

Step 503: The second three-dimensional coordinates of each three-dimensional mark point in the global framework are adjusted based on the ratio to obtain an adjusted global framework.

In the embodiments of the present disclosure, after the ratio of the ruler corresponding to the object to be measured is obtained, the ratio of one ruler can be selected, and the second three-dimensional coordinates of each three-dimensional mark point in the global framework are multiplied by the ratio to adjust the second three-dimensional coordinates of each three-dimensional mark point in the global framework, so as to obtain an adjusted global framework.

In some embodiments, the process of adjusting the second three-dimensional coordinates of each three-dimensional mark point in the global framework based on the ratio to obtain an adjusted global framework may include steps 50301 to 50302:

Step 50301: An average ratio of the rulers corresponding to the object to be measured is computed based on the number of the rulers and the ratio.

In the embodiments of the present disclosure, a quotient of the ratio and the number can be computed based on the number of the ruler and the ratio of the measurement size to the physical size of each ruler, so as to obtain the average ratio of the rulers corresponding to the object to be measured.

Step 50302: The second three-dimensional coordinates of each three-dimensional mark point in the global framework are adjusted based on the average ratio to obtain an adjusted framework.

In the embodiments of the present disclosure, after the average ratio of the rulers corresponding to the object to be measured is obtained, the second three-dimensional coordinates of each three-dimensional mark point in the global framework may be multiplied by the average ratio to adjust the second three-dimensional coordinates of each three-dimensional mark point in the global framework, so as to obtain an adjusted global framework.

For example, three rulers a, b and c are arranged on the surface of the object to be measured; a physical length of the ruler a is 100.1 mm, a physical length of the ruler b is 100.2 mm, and a physical length of the ruler c is 100.3 mm; for each ruler, based on the second three-dimensional coordinates corresponding to the encoded mark points in the ruler, it can be computed that the measurement size of the ruler a is 99.9 mm, the measurement size of the ruler b is 100.0 mm, and the measurement size of the ruler c is 100.1 mm; an average ratio (100.1/99.9 + 100.2/100.0 + 100.3/100.1)/3 of the three rulers is computed; and then, the second three-dimensional coordinates of each three-dimensional mark point in the global framework are multiplied by the average ratio to adjust the second three-dimensional coordinates of the three-dimensional mark points in the global framework, so as to obtain an adjusted global framework.

Therefore, the second three-dimensional coordinates of each three-dimensional mark point in the global framework can be adjusted according to the ruler corresponding to the object to be measured to optimize the global framework, so as to improve accuracy of photogrammetry.

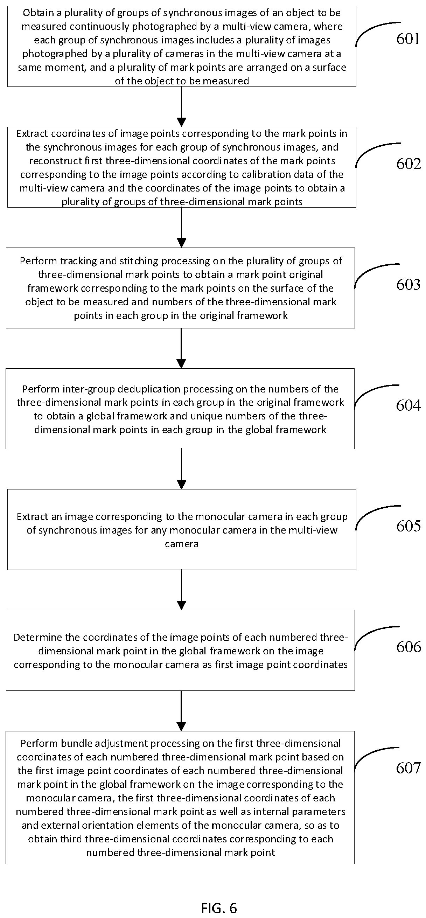

FIG. 6 is a flowchart of still yet another photogrammetry method provided in an embodiment of the present disclosure. As shown in FIG. 6, the method includes steps 601 to 607:

Step 601: Multiple groups of synchronous images of an object to be measured continuously photographed by a multi-view camera are obtained. Each group of synchronous images includes multiple images photographed by multiple cameras in the multi-view camera at a same moment, and multiple mark points are arranged on a surface of the object to be measured.

Step 602: Coordinates of image points corresponding to the mark points in the synchronous images are extracted for each group of synchronous images, and first three-dimensional coordinates of the mark points corresponding to the image points are reconstructed according to calibration data of the multi-view camera and the coordinates of the image points to obtain multiple groups of three-dimensional mark points.

Step 603: Tracking and stitching processing is performed on the multiple groups of three-dimensional mark points to obtain a mark point original framework corresponding to the mark points on the surface of the object to be measured and numbers of the three-dimensional mark points in each group in the original framework.

Step 604: Inter-group deduplication processing is performed on the numbers of the three-dimensional mark points in each group in the original framework to obtain a global framework and unique numbers of the three-dimensional mark points in each group in the global framework.

Step 605: An image corresponding to the monocular camera in each group of synchronous images is extracted for any monocular camera in the multi-view camera.

In the embodiments of the present disclosure, the multi-view camera includes at least two monocular cameras. After the mark point global framework corresponding to the mark points on the surface of the object to be measured and the unique numbers of the three-dimensional mark points in each group in the global framework are obtained, an image corresponding to the monocular camera in each group of synchronous images can be extracted for any monocular camera in the multi-view camera.

Step 606: The coordinates of the image points of each numbered three-dimensional mark point in the global framework on the image corresponding to the monocular camera are determined as first image point coordinates.

In the embodiments of the present disclosure, the coordinates of the image points of each numbered three-dimensional mark point in the global framework on the image corresponding to the monocular camera can be determined first, and then, the coordinates of the image points of each numbered three-dimensional mark point in the global framework on the image corresponding to the monocular camera can be determined as first image point coordinates.

Step 607: Bundle adjustment processing is performed on the first three-dimensional coordinates of each numbered three-dimensional mark point based on the first image point coordinates of each numbered three-dimensional mark point in the global framework on the image corresponding to the monocular camera, the first three-dimensional coordinates of each numbered three-dimensional mark point as well as internal parameters and external orientation elements of the monocular camera, so as to obtain third three-dimensional coordinates corresponding to each numbered three-dimensional mark point.

In the embodiments of the present disclosure, the internal parameters of the monocular camera can be obtained through calibration. The parameters of the spatial position and posture of a photographic beam at a moment of photography can be determined according to the internal parameters of the monocular camera. The parameters of the spatial position and posture of the photographic beam at the moment of photography are referred to as external orientation elements for representing the spatial position of the photographic beam at the moment of photography. The external orientation elements include six parameters. Three elements are line elements for describing spatial coordinate values of a photographic centre, and the other three are angle elements for describing the spatial posture of the image.

In the embodiments of the present disclosure, bundle adjustment processing can be performed on the first three-dimensional coordinates of each numbered three-dimensional mark point based on the first image point coordinates of each numbered three-dimensional mark point in the global framework on the image corresponding to the monocular camera, the first three-dimensional coordinates of each numbered three-dimensional mark point as well as the internal parameters and external orientation elements of the monocular camera, so as to obtain the third three-dimensional coordinates corresponding to each numbered three-dimensional mark point.

The "third three-dimensional coordinates" referred to in the embodiments of the present disclosure are only used for distinguishing three-dimensional coordinates obtained based on a three-dimensional reconstruction method and three-dimensional coordinates obtained based on other methods, and do not have any other meaning.

In some embodiments, the process of performing bundle adjustment processing on the first three-dimensional coordinates of each numbered three-dimensional mark point based on the first image point coordinates of each numbered three-dimensional mark point in the global framework on the image corresponding to the monocular camera, the first three-dimensional coordinates of each numbered three-dimensional mark point as well as internal parameters and external orientation elements of the monocular camera, so as to obtain third three-dimensional coordinates corresponding to each numbered three-dimensional mark point may include steps 60701 to 60703:

Step 60701: Projection transformation is performed on the first three-dimensional coordinates of each numbered three-dimensional mark point to obtain second image point coordinates of the image points of the first three-dimensional coordinates on the image corresponding to the monocular camera.

In the embodiments of the present disclosure, projection transformation can be performed on the first three-dimensional coordinates of each numbered three-dimensional mark point to obtain coordinates of the image points of the first three-dimensional coordinates on the image corresponding to the monocular camera, namely second image point coordinates.

Step 60702: Residual equations corresponding to each numbered three-dimensional mark point are established based on the first image point coordinates and second image point coordinates corresponding to each numbered three-dimensional mark point.

In the embodiments of the present disclosure, after the first image point coordinates and second image point coordinates corresponding to the first three-dimensional coordinates of each numbered three-dimensional mark point are obtained, residual equations corresponding to each numbered three-dimensional mark point can be established based on the first image point coordinates and second image point coordinates corresponding to each numbered three-dimensional mark point.

Step 60703: Iterative computations are performed on all residual equations in sequence by taking the first three-dimensional coordinates of each numbered three-dimensional mark point in the global framework as well as internal parameters and external orientation elements of the monocular camera as initial values based on a bundle adjustment algorithm, so as to obtain third three-dimensional coordinates corresponding to each numbered three-dimensional mark point.

In the embodiments of the present disclosure, iterative computations can be performed on all residual equations corresponding to each numbered three-dimensional mark point in sequence by taking the first three-dimensional coordinates of each numbered three-dimensional mark point in the global framework as well as the internal parameters and external orientation elements of the monocular camera as the initial values, so as to obtain the third three-dimensional coordinates corresponding to each numbered three-dimensional mark point. The process of the bundle adjustment algorithm involved in the embodiments of the present disclosure is similar to that in related technologies, so details can refer to the bundle adjustment algorithm provided in the related technologies and will not be described here.

Therefore, bundle adjustment processing can be performed on the first three-dimensional coordinates of each numbered three-dimensional mark point based on the first image point coordinates of each numbered three-dimensional mark point in the global framework on the image corresponding to the monocular camera, the first three-dimensional coordinates of each numbered three-dimensional mark point as well as the internal parameters and external orientation elements of the monocular camera, so as to obtain the third three-dimensional coordinates corresponding to each numbered three-dimensional mark point. As a result, adverse impacts on the measurement result of the multi-view camera caused by possible structural instability factors of the multi-view camera can be avoided to obtain optimized three-dimensional coordinates, so a three-dimensional image obtained by multi-view measurement is more accurate.

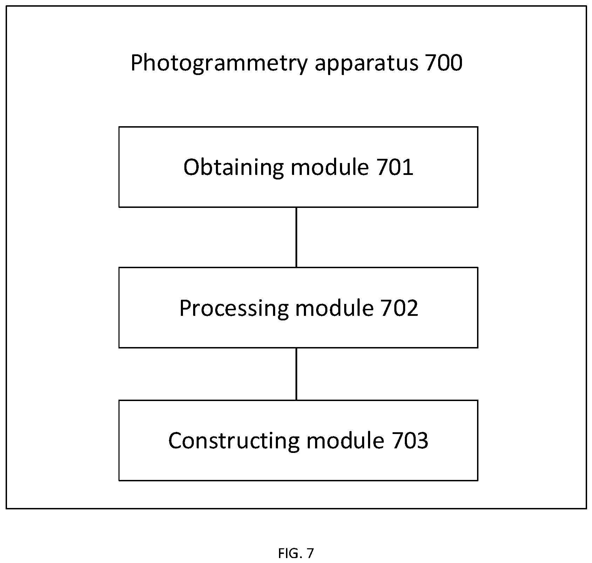

FIG. 7 is a schematic structural diagram of a photogrammetry apparatus provided in an embodiment of the present disclosure. The photogrammetry apparatus may be understood as the above photogrammetry device or partial function components of the photogrammetry device. As shown in FIG. 7, a photogrammetry apparatus 700 includes:

an obtaining component 701, configured to obtain multiple groups of synchronous images obtained by continuously photographing an object to be measured by a multi-view camera, each group of synchronous images including multiple images photographed by multiple cameras in the multi-view camera at a same moment, and multiple mark points being arranged on a surface of the object to be measured;
a processing component 702, configured to extract coordinates of image points corresponding to the mark points in the synchronous images for each group of synchronous images, and reconstruct first three-dimensional coordinates of the mark points corresponding to the image points according to calibration data of the multi-view camera and the coordinates of the image points to obtain multiple groups of three-dimensional mark points; and
a constructing component 703, configured to construct a mark point global framework corresponding to the mark points on the surface of the object to be measured based on the multiple groups of three-dimensional mark points.

Optionally, the above constructing component 703 includes:
a processing sub-component, configured to perform tracking and stitching processing and inter-group deduplication processing on the multiple groups of three-dimensional mark points to obtain the mark point global framework corresponding to the mark points on the surface of the object to be measured.

Optionally, the above processing sub-component includes:

a tracking and stitching unit, configured to perform tracking and stitching processing on the multiple groups of three-dimensional mark points to obtain a mark point original framework corresponding to the mark points on the surface of the object to be measured and numbers of the three-dimensional mark points in each group in the original framework; and
an inter-group deduplication unit, configured to perform inter-group deduplication processing on the numbers of the three-dimensional mark points in each group in the original framework to obtain a global framework and unique numbers of the three-dimensional mark points in each group in the global framework.

Optionally, the processing component 702 includes:

an extraction sub-component, configured to perform edge extraction processing on the synchronous images to obtain the image points in the synchronous images; and

a determining sub-component, configured to determine the coordinates of the image points in a coordinate system of the synchronous images based on the positions of the image points in the synchronous images.

Optionally, the above tracking and stitching unit includes:

an extraction sub-unit, configured to extract features of each group of three-dimensional mark points;

a first determining sub-unit, configured to determine the three-dimensional mark points with the feature similarity higher than or equal to a preset threshold as a same three-dimensional mark points and determine the three-dimensional mark points with the feature similarity less than the preset threshold as different three-dimensional mark points based on the features of each group of three-dimensional mark points; and

a numbering sub-unit, configured to number the same three-dimensional mark points with the same numbers, and number the different three-dimensional mark points with different numbers.

Optionally, the above processing sub-component further includes:

a first bundle adjustment unit, configured to perform bundle adjustment processing on the first three-dimensional coordinates of each numbered three-dimensional mark point based on the coordinates of the image points and first three-dimensional coordinates of each numbered three-dimensional mark point in the global framework on each group of synchronous images as well as the internal parameters and external parameters of the multi-view camera, so as to obtain second three-dimensional coordinates corresponding to each numbered three-dimensional mark point.

Optionally, the above first bundle adjustment unit includes:

a first computing sub-unit, configured to respectively input internal orientation elements and external orientation elements corresponding to each group of synchronous images into collinear equations to obtain collinear equations to be solved corresponding to each group of synchronous images; and

a second computing sub-unit, configured to perform iterative computations on all collinear equations to be solved in sequence by taking the coordinates of the image points of each numbered three-dimensional mark point in the global framework on each group of synchronous images and the first three-dimensional coordinates of each numbered three-dimensional mark point as initial values based on a bundle adjustment algorithm, so as to obtain second three-dimensional coordinates corresponding to each numbered three-dimensional mark point.

Optionally, the above processing sub-component further includes:

an obtaining unit, configured to obtain a measurement size of at least one ruler corresponding to the object to be measured and a physical size corresponding to the measurement size;

a first computing unit, configured to compute a ratio of the measurement size to the physical size; and

an adjusting unit, configured to adjust the second three-dimensional coordinates of each three-dimensional mark point in the framework based on the ratio to obtain an adjusted framework.

Optionally, the above obtaining unit includes:

an obtaining sub-unit, configured to obtain second three-dimensional coordinates of encoded mark points corresponding to encoded information based on the encoded information on any two encoded mark points in the ruler;

a third computing sub-unit, configured to compute the distance between any two encoded mark points based on the second three-dimensional coordinates of the encoded mark points corresponding to the encoded information, so as to obtain a measurement size corresponding to the ruler; and

a second determining sub-unit, configured to determine a physical size corresponding to the measurement size based on the encoded information on the encoded mark points corresponding to the measurement size.

Optionally, the above adjusting unit includes:

a fourth computing sub-unit, configured to compute an average ratio of the rulers corresponding to the object to be measured based on the number of the rulers and the ratio; and

an adjusting sub-unit, configured to adjust the second three-dimensional coordinates of each three-dimensional mark point in the global framework based on the average ratio to obtain an adjusted framework.

Optionally, the above processing sub-component further includes:

an extraction unit, configured to extract an image corresponding to the monocular camera in each group of synchronous images for any monocular camera in the multi-view camera;

a determining unit, configured to determine the coordinates of the image points of each numbered three-dimensional mark point in the global framework on the image corresponding to the monocular camera as first image point coordinates; and

a second bundle adjustment unit, configured to perform bundle adjustment processing on the first three-dimensional coordinates of each numbered three-dimensional mark point based on the first image point coordinates of each numbered three-dimensional mark point in the global framework on the image corresponding to the monocular camera, the first three-dimensional coordinates of each numbered three-dimensional mark point as well as internal parameters and external orientation elements of the monocular camera, so as to obtain third three-dimensional coordinates corresponding to each numbered three-dimensional mark point.

Optionally, the above second bundle adjustment unit includes:

a projection transformation sub-unit, configured to perform projection transformation on the first three-dimensional coordinates of each numbered three-dimensional mark point to obtain second image point coordinates of the image points of the first three-dimensional coordinates on the image corresponding to the monocular camera;

an establishing sub-unit, configured to establish residual equations corresponding to each numbered three-dimensional mark point based on the first image point coordinates and second image point coordinates corresponding to each numbered three-dimensional mark point; and

a fourth computing sub-unit, configured to perform iterative computations on all residual equations in sequence by taking the first three-dimensional coordinates of each numbered three-dimensional mark point in the global framework as well as internal parameters and external orientation elements of the monocular camera as initial values based on a bundle adjustment algorithm, so as to obtain third three-dimensional coordinates corresponding to each numbered three-dimensional mark point.

The photogrammetry apparatus provided in the embodiment of the present disclosure may implement the method according to any one of the above embodiments. Execution modes and beneficial effects are similar and will not be described here.

An embodiment of the present disclosure provides a photogrammetry device, including:

a memory and a processor, the memory storing a computer program, and the computer program, when executed by the processor, implementing the photogrammetry method described above. Execution modes and beneficial effects are similar and will not be described here.

An embodiment of the present disclosure provides a computer-readable storage medium:

The storage medium stores a computer program, and the computer program, when executed by a processor, may implement the photogrammetry method described above. Execution modes and beneficial effects are similar and will not be described here.

The above computer-readable storage medium may use any combination of one or more readable media. The readable medium may be a readable signal medium or a readable storage medium. The readable storage medium may include, but is not limited to, an electrical, magnetic, optical, electromagnetic, infrared, or semiconductor system, apparatus or device, or any combination of the above. More specific examples (a non-exhaustive list) of the readable storage medium include: an electrical connector having one or more wires, a portable disk, a hard disk, a random access memory (RAM), a read-only memory (ROM), an erasable programmable read-only memory (EPROM or flash memory), an optical fibre, a portable compact disc read-only memory (CD-ROM), an optical storage device, a magnetic storage device, or any appropriate combination of the above.

Program codes for executing the operations of the embodiments of the present disclosure may be written by the above computer program in any combination of one or more programming languages. The programming languages include object-oriented programming languages such as Java and C++, and further include conventional procedural programming languages such as "C" language or similar programming languages. The program codes may be executed completely on a user computer device, partially on user equipment, as a stand-alone software package, partially on a user computer device and partially on a remote computer device, or completely on a remote computer device or a server.

It should be noted that in the article, the "first", the "second" and other relational terms are used for distinguishing an entity or an operation from the other entities and operations only, not necessarily to require or imply any actual relationship or sequence between the entities or the operations; and the terms, such as "comprise", "comprising" or any other variant, are intended to cover non-exclusive comprising, so that processes, methods, goods or devices containing a series of factors not only comprise the factors, but also comprise other factors which are not listed obviously, or comprise the inherent factors of the processes, the methods, the goods or the devices. The factors restrained by a statement "include a..." shall not exclude the condition that other same factors also exist in the processes, methods, goods or devices including the factors under the condition that no more restraints are required.

The above is only the specific implementation disclosed in the present disclosure, which enables those skilled in the art to understand or implement the present disclosure. Various modifications for the embodiments would be obvious for those skilled in the art, and a general principle defined in the present description can be implemented in other embodiments in the case of not departing from the spirit or scope of the present invention. Therefore, the present invention is not limited to the embodiments described herein, but should fall within a widest scope consistent with the principle and innovative characteristics disclosed herein.

Industrial Applicability

According to the photogrammetry method provided by the present disclosure, matching of the same mark points can be achieved without encoded points or with a small number of encoded points by a multi-view measurement technology, thus achieving the photogrammetry without encoded points or with a small number of encoded points, reducing workload of the measuring personnel in arranging encoded points, and improving measurement efficiency. Furthermore, because the photogrammetry of an object to be measured can be achieved without encoded points, inaccurate measurement due to movement of encoded points is avoided, measurement accuracy is improved, and industrial applicability is very strong.

**Claims**

1. A method for photogrammetry, comprising:

   obtaining a plurality of groups of synchronous images of an object to be measured continuously photographed by a multi-view camera, wherein that each group of synchronous images comprises a plurality of images photographed by a plurality of cameras in the multi-view camera at a same moment, and a plurality of mark points are arranged on a surface of the object to be measured;
   extracting coordinates of image points corresponding to the mark points in the synchronous images for each group of synchronous images, and reconstructing first three-dimensional coordinates of the mark points corresponding to the image points according to calibration data of the multi-view camera and the coordinates of the image points to obtain a plurality of groups of three-dimensional mark points; and
   obtaining a mark point global framework corresponding to the mark points on the surface of the object to be measured based on the plurality of groups of three-dimensional mark points.

2. The method as claimed in claim 1, wherein the obtaining the mark point global framework corresponding to the mark points on the surface of the object to be measured based on the plurality of groups of three-dimensional mark points comprises:
   performing tracking and stitching processing and inter-group deduplication processing on the plurality of groups of three-dimensional mark points to obtain the mark point global framework corresponding to the mark points on the surface of the object to be measured.

3. The method as claimed in claim 2, wherein the performing tracking and stitching processing and inter-group deduplication processing on the plurality of groups of three-dimensional mark points to obtain the mark point global framework corresponding to the mark points on the surface of the object to be measured comprises:

   performing tracking and stitching processing on the plurality of groups of three-dimensional mark points to obtain a mark point original framework corresponding to the mark points on the surface of the object to be measured and numbers of the three-dimensional mark points in each group in the original framework; and
   performing inter-group deduplication processing on the numbers of the three-dimensional mark points in each group in the original framework to obtain the global framework and unique numbers of the three-dimensional mark points in each group in the global framework.

4. The method as claimed in claim 1, wherein the extracting coordinates of image points corresponding to the mark points in the synchronous images comprises:

   performing edge extraction processing on the synchronous images to obtain the image points in the synchronous images; and

determining the coordinates of the image points in a coordinate system of the synchronous images based on positions of the image points in the synchronous images.

5. The method as claimed in claim 3, wherein the performing tracking and stitching processing on the plurality of groups of three-dimensional mark points comprises:

extracting features of each group of three-dimensional mark points;

determining three-dimensional mark points with feature similarity higher than or equal to a preset threshold as same three-dimensional mark points and determining three-dimensional mark points with the feature similarity less than the preset threshold as different three-dimensional mark points based on the features of each group of three-dimensional mark points; and

numbering the same three-dimensional mark points with same numbers, and numbering the different three-dimensional mark points with different numbers.

6. The method as claimed in claim 3, wherein after the obtaining the unique numbers of the three-dimensional mark points in each group in the global framework, the method further comprises:

performing bundle adjustment processing on the first three-dimensional coordinates of each numbered three-dimensional mark point based on the coordinates of the image points and the first three-dimensional coordinates of each numbered three-dimensional mark point in the global framework on each group of synchronous images as well as internal parameters and external parameters of the multi-view camera, so as to obtain second three-dimensional coordinates corresponding to each numbered three-dimensional mark point.

7. The method as claimed in claim 6, wherein the performing bundle adjustment processing on the first three-dimensional coordinates of each numbered three-dimensional mark point based on the coordinates of the image points and the first three-dimensional coordinates of each numbered three-dimensional mark point in the global framework on each group of synchronous images as well as internal parameters and external parameters of the multi-view camera, so as to obtain second three-dimensional coordinates corresponding to each numbered three-dimensional mark point comprises:

respectively inputting internal orientation elements and external orientation elements corresponding to each group of synchronous images into collinear equations to obtain collinear equations to be solved corresponding to each group of synchronous images; and

performing iterative computations on all collinear equations to be solved in sequence by taking the coordinates of the image points of each numbered three-dimensional mark point in the global framework on each group of synchronous images and the first three-dimensional coordinates of each numbered three-dimensional mark point as initial values based on a bundle adjustment algorithm, so as to obtain the second three-dimensional coordinates corresponding to each numbered three-dimensional mark point.

8. The method as claimed in claim 6, wherein after the obtaining the second three-dimensional coordinates corresponding to each numbered three-dimensional mark point, the method further comprises:

obtaining a measurement size of at least one ruler corresponding to the object to be measured and a physical size corresponding to the measurement size;

computing a ratio of the measurement size to the physical size; and

adjusting second three-dimensional coordinates of each three-dimensional mark point in the global framework based on the ratio to obtain an adjusted framework.

9. The method as claimed in claim 8, wherein the obtaining a measurement size of at least one ruler corresponding to the object to be measured and a physical size corresponding to the measurement size comprises:

obtaining second three-dimensional coordinates of encoded mark points corresponding to encoded information based on the encoded information on any two encoded mark points in the ruler;

computing a distance between any two encoded mark points based on the second three-dimensional coordinates of the encoded mark points corresponding to the encoded information, so as to obtain a measurement size corresponding to the ruler; and

determining the physical size corresponding to the measurement size based on the encoded information on the encoded mark points corresponding to the measurement size.

**10.** The method as claimed in claim 8, wherein the adjusting second three-dimensional coordinates of each three-dimensional mark point in the global framework based on the ratio to obtain an adjusted framework comprises:

computing an average ratio of the rulers corresponding to the object to be measured based on number of the rulers and the ratio; and
adjusting the second three-dimensional coordinates of each three-dimensional mark point in the global framework based on the average ratio to obtain the adjusted framework.

**11.** The method as claimed in claim 3, wherein after the obtaining the unique numbers of the three-dimensional mark points in each group in the global framework, the method further comprises:

extracting an image corresponding to a monocular camera in each group of synchronous images for any monocular camera in the multi-view camera;
determining coordinates of the image points of each numbered three-dimensional mark point in the global framework on the image corresponding to the monocular camera as first image point coordinates; and
performing bundle adjustment processing on the first three-dimensional coordinates of each numbered three-dimensional mark point based on the first image point coordinates of each numbered three-dimensional mark point in the global framework on the image corresponding to the monocular camera, the first three-dimensional coordinates of each numbered three-dimensional mark point as well as internal parameters and external orientation elements of the monocular camera, so as to obtain third three-dimensional coordinates corresponding to each numbered three-dimensional mark point.

**12.** The method as claimed in claim 11, wherein the performing bundle adjustment processing on the first three-dimensional coordinates of each numbered three-dimensional mark point based on the first image point coordinates of each numbered three-dimensional mark point in the global framework on the image corresponding to the monocular camera, the first three-dimensional coordinates of each numbered three-dimensional mark point as well as internal parameters and external orientation elements of the monocular camera, so as to obtain third three-dimensional coordinates corresponding to each numbered three-dimensional mark point comprises:

performing projection transformation on the first three-dimensional coordinates of each numbered three-dimensional mark point to obtain second image point coordinates of the image points of the first three-dimensional coordinates on the image corresponding to the monocular camera;
establishing residual equations corresponding to each numbered three-dimensional mark point based on the first image point coordinates and second image point coordinates corresponding to each numbered three-dimensional mark point; and
performing iterative computations on all residual equations in sequence by taking the first three-dimensional coordinates of each numbered three-dimensional mark point in the global framework as well as the internal parameters and external orientation elements of the monocular camera as initial values based on a bundle adjustment algorithm, so as to obtain the third three-dimensional coordinates corresponding to each numbered three-dimensional mark point.

**13.** An apparatus for photogrammetry, comprising:

an obtaining component, configured to obtain a plurality of groups of synchronous images of an object to be measured continuously photographed by a multi-view camera, wherein each group of synchronous images comprises a plurality of images photographed by a plurality of cameras in the multi-view camera at a same moment, and a plurality of mark points are arranged on a surface of the object to be measured;
a processing component, configured to extract coordinates of image points corresponding to the mark points in the synchronous images for each group of synchronous images, and reconstruct first three-dimensional coordinates of the mark points corresponding to the image points according to calibration data of the multi-view camera and the coordinates of the image points to obtain a plurality of groups of three-dimensional mark points; and
a constructing component, configured to construct a mark point global framework corresponding to the mark points on the surface of the object to be measured based on the plurality of groups of three-dimensional mark points.

**14.** A photogrammetry device, comprising:
a memory and a processor, wherein the memory stores a computer program, and the computer program, when executed by the processor, implements the method as claimed in any one of claims 1 to 12.

15. A computer-readable storage medium, wherein the storage medium stores a computer program, and the computer program, when executed by a processor, implements the method as claimed in any one of claims 1 to 12.

| Obtain a plurality of groups of synchronous images of an object to be measured continuously photographed by a multi-view camera, where each group of synchronous images includes a plurality of images photographed by a plurality of cameras in the multi-view camera at a same moment, and a plurality of mark points are arranged on a surface of the object to be measured | 101 |

| Extract coordinates of image points corresponding to the mark points in the synchronous images for each group of synchronous images, and reconstruct first three-dimensional coordinates of the mark points corresponding to the image points according to calibration data of the multi-view camera and the extracted coordinates of the image points to obtain a plurality of groups of three-dimensional mark points | 102 |

| Construct a mark point global framework corresponding to the mark points on the surface of the object to be measured based on the plurality of groups of three-dimensional mark points | 103 |

FIG. 1

FIG. 2

Obtain a plurality of groups of synchronous images of an object to be measured continuously photographed by a multi-view camera, where each group of synchronous images includes a plurality of images photographed by a plurality of cameras in the multi-view camera at a same moment, and a plurality of mark points are arranged on a surface of the object to be measured

301

Extract coordinates of image points corresponding to the mark points in the synchronous images for each group of synchronous images, and reconstruct first three-dimensional coordinates of the mark points corresponding to the image points according to calibration data of the multi-view camera and the extracted coordinates of the image points to obtain a plurality of groups of three-dimensional mark points

302

Perform tracking and stitching processing on the plurality of groups of three-dimensional mark points to obtain a mark point original framework corresponding to the mark points on the surface of the object to be measured and numbers of the three-dimensional mark points in each group in the original framework

303

Perform inter-group deduplication processing on the numbers of the three-dimensional mark points in each group in the original framework to obtain a mark point global framework corresponding to the mark points on the surface of the object to be measured and unique numbers of the three-dimensional mark points in each group in the global framework

304

FIG. 3

Obtain a plurality of groups of synchronous images of an object to be measured continuously photographed by a multi-view camera, where each group of synchronous images includes a plurality of images photographed by a plurality of cameras in the multi-view camera at a same moment, and a plurality of mark points are arranged on a surface of the object to be measured — 401

Extract coordinates of image points corresponding to the mark points in the synchronous images for each group of synchronous images, and reconstruct first three-dimensional coordinates of the mark points corresponding to the image points according to calibration data of the multi-view camera and the extracted coordinates of the image points to obtain a plurality of groups of three-dimensional mark points — 402

Perform tracking and stitching processing on the plurality of groups of three-dimensional mark points to obtain a mark point original framework corresponding to the mark points on the surface of the object to be measured and numbers of the three-dimensional mark points in each group in the original framework — 403

Perform inter-group deduplication processing on the numbers of the three-dimensional mark points in each group in the original framework to obtain a mark point global framework corresponding to the mark points on the surface of the object to be measured and unique numbers of the three-dimensional mark points in each group in the global framework — 404

Perform bundle adjustment processing on the first three-dimensional coordinates of each numbered three-dimensional mark point based on the coordinates of the image points and first three-dimensional coordinates of each numbered three-dimensional mark point in the global framework on each group of synchronous images as well as internal parameters and external parameters of the multi-view camera, so as to obtain second three-dimensional coordinates corresponding to each numbered three-dimensional mark point — 405

FIG. 4

Obtain a measurement size of at least one ruler corresponding to an
object to be measured and a physical size corresponding to the
measurement size
——— 501

Compute a ratio of the measurement size to the physical size of the ruler ——— 502

Adjust the second three-dimensional coordinates of each three-
dimensional mark point in a global framework based on the ratio to
obtain an adjusted global framework
——— 503

FIG. 5

Obtain a plurality of groups of synchronous images of an object to be measured continuously photographed by a multi-view camera, where each group of synchronous images includes a plurality of images photographed by a plurality of cameras in the multi-view camera at a same moment, and a plurality of mark points are arranged on a surface of the object to be measured
601

Extract coordinates of image points corresponding to the mark points in the synchronous images for each group of synchronous images, and reconstruct first three-dimensional coordinates of the mark points corresponding to the image points according to calibration data of the multi-view camera and the coordinates of the image points to obtain a plurality of groups of three-dimensional mark points
602

Perform tracking and stitching processing on the plurality of groups of three-dimensional mark points to obtain a mark point original framework corresponding to the mark points on the surface of the object to be measured and numbers of the three-dimensional mark points in each group in the original framework
603

Perform inter-group deduplication processing on the numbers of the three-dimensional mark points in each group in the original framework to obtain a global framework and unique numbers of the three-dimensional mark points in each group in the global framework
604

Extract an image corresponding to the monocular camera in each group of synchronous images for any monocular camera in the multi-view camera
605

Determine the coordinates of the image points of each numbered three-dimensional mark point in the global framework on the image corresponding to the monocular camera as first image point coordinates
606

Perform bundle adjustment processing on the first three-dimensional coordinates of each numbered three-dimensional mark point based on the first image point coordinates of each numbered three-dimensional mark point in the global framework on the image corresponding to the monocular camera, the first three-dimensional coordinates of each numbered three-dimensional mark point as well as internal parameters and external orientation elements of the monocular camera, so as to obtain third three-dimensional coordinates corresponding to each numbered three-dimensional mark point
607

FIG. 6

Photogrammetry apparatus 700

Obtaining module 701

Processing module 702

Constructing module 703

FIG. 7

## INTERNATIONAL SEARCH REPORT

| International application No. |
| --- |
| **PCT/CN2022/121930** |

**A. CLASSIFICATION OF SUBJECT MATTER**

G06T 3/40(2006.01)i

According to International Patent Classification (IPC) or to both national classification and IPC

**B. FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNPAT, WPI, EPODOC, CNKI: 多目, 相机, 多相机, 拍摄, 拍照, 同一时刻, 同时, 同步, 图像, 标志点, 标定, 三维, 坐标, 重建, 框架, 拼接, multi cameras, shoot, photo, same time, synchronization, image, mark point, scale, calibrate, 3D, three dimensional, rebuild, reconstruct, frame, joint, splice

**C. DOCUMENTS CONSIDERED TO BE RELEVANT**

| Category* | Citation of document, with indication, where appropriate, of the relevant passages | Relevant to claim No. |
| --- | --- | --- |
| PX | CN 113592721 A (TENYOUN 3D (TIANJIN) TECHNOLOGY CO., LTD.) 02 November 2021 (2021-11-02) claims 1-10 | 1-7, 13-15 |
| X | CN 103743352 A (XI'AN JIAOTONG UNIVERSITY) 23 April 2014 (2014-04-23) description, paragraphs [0025]-[0045], and figures 4-6 | 1-2, 4, 13-15 |
| A | CN 106096207 A (WUHAN ZHONGGUANG AUTOMATION TECHNOLOGY CO., LTD.) 09 November 2016 (2016-11-09) entire document | 1-15 |
| A | CN 110360991 A (WUHAN ZHONGGUANG AUTOMATION TECHNOLOGY CO., LTD.) 22 October 2019 (2019-10-22) entire document | 1-15 |
| A | CN 111640062 A (SHANGHAI HINGE ELECTRONIC TECHNOLOGY CO., LTD.) 08 September 2020 (2020-09-08) entire document | 1-15 |

☑ Further documents are listed in the continuation of Box C.   ☑ See patent family annex.

| | |
| --- | --- |
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **05 December 2022** | **15 December 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/121930**

**C.    DOCUMENTS CONSIDERED TO BE RELEVANT**

| Category* | Citation of document, with indication, where appropriate, of the relevant passages | Relevant to claim No. |
|---|---|---|
| A | WO 2019179200 A1 (SHENZHEN ARASHI VISION CO., LTD.) 26 September 2019 (2019-09-26)<br>entire document | 1-15 |

Form PCT/ISA/210 (second sheet) (January 2015)

**INTERNATIONAL SEARCH REPORT**
**Information on patent family members**

| International application No. |
| --- |
| **PCT/CN2022/121930** |

| Patent document cited in search report | | | Publication date (day/month/year) | Patent family member(s) | | | Publication date (day/month/year) |
| --- | --- | --- | --- | --- | --- | --- | --- |
| CN | 113592721 | A | 02 November 2021 | None | | | |
| CN | 103743352 | A | 23 April 2014 | None | | | |
| CN | 106096207 | A | 09 November 2016 | None | | | |
| CN | 110360991 | A | 22 October 2019 | None | | | |
| CN | 111640062 | A | 08 September 2020 | None | | | |
| WO | 2019179200 | A1 | 26 September 2019 | CN | 108564617 | A | 21 September 2018 |

**EP 4 411 627 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202111133068